# EUROPÄISCHE PATENTANMELDUNG

(11) **EP 4 362 606 A1**
(43) Veröffentlichungstag der Anmeldung: **01.05.2024**
(21) Anmeldenummer: 23204263.0
(22) Anmeldetag: 18.10.2023
(51) Int. Cl.: H05B 3/06, H05B 3/44

(54) **PTC-HEIZVORRICHTUNG UND VERFAHREN ZU DEREN HERSTELLUNG**

(30) Priorität: 21.10.2022 DE 102022127875
(71) Anmelder: Eberspächer catem GmbH & Co. KG, 76863 Herxheim (DE)
(72) Erfinder: Kröner, Timo, 76761 Rülzheim (DE); Werner, Patrick, 67141 Neuhofen (DE); Dattilo, Daniele, 76835 Rhodt unter Rietburg (DE)
(74) Vertreter: Grünecker Patent- und Rechtsanwälte PartG mbB

(57) **Zusammenfassung**

Die vorliegende Erfindung betrifft eine PTC-Heizvorrichtung (2) mit einem Rahmen (4), der einen Aufnahmeraum (6) umgibt, zumindest einem in dem Aufnahmeraum (6) aufgenommenen PTC-Element (8) und mit dem PTC-Element (8) elektrisch leitend verbundenen Leiterelementen (14), die das PTC-Element (8) zwischen sich einschließen, wobei jedes der Leiterelemente (14) umfänglich von einem Rahmensegment (4.1; 4.2) umgeben ist. Zum prozesssicheren Verbinden der Rahmensegmente (4.1; 4.2) werden diese zum Einschluss des PTC-Elementes (8) in dem Aufnahmeraum (6) miteinander verschweißt. Bei dem erfindungsgemäßen Verfahren werden Rahmensegmente (4.1; 4.2) aus einem Kunststoff spritzgegossen. Hierbei werden an den Rahmensegmenten (4.1; 4.2) zusammenwirkende Verbindungssegmente (40; 42) ausgebildet. Jedes der Rahmensegmente (4.1; 4.2) wird dabei auch mit einem Leiterelement (14) verbunden. Sodann wird zwischen die Rahmensegmente (4.1; 4.2) zumindest ein PTC-Element (8) eingebracht. Die Rahmensegmente (4.1; 4.2) werden einander angenähert, bis die Verbindungssegmente (40; 42) gegeneinander anliegen. Die Verbindungssegmente (40; 42) werden sodann angeschmolzen. Dabei werden die Rahmensegmente (4.1; 4.2) weiter einander angenähert, bis die Leiterelemente (14) gegen das PTC-Element (8) anliegen.

## Beschreibung

Die vorliegende Erfindung betrifft eine PTC-Heizvorrichtung mit einem Rahmen, der einen Aufnahmeraum umgibt, zumindest einem PTC-Element, das in dem Aufnahmeraum aufgenommen ist, und mit Leiterelementen, die elektrisch leitend mit dem PTC-Element verbunden sind. Die Leiterelemente schließen das PTC-Element zwischen sich ein. Jedes der Leiterelemente ist ganz oder teilweise umfänglich von dem Rahmen, konkret von einem Rahmensegment, welches einen Teil des Rahmens ausbildet, umgeben.

Eine gattungsgemäße PTC-Heizvorrichtung ist beispielsweise aus EP 2 337 425 A1 oder EP 1 872 986 A1 bekannt.

PTC-Heizvorrichtungen der eingangs genannten Art kommen - wie auch die PTC-Heizvorrichtung nach der vorliegenden Erfindung - üblicherweise in Kraftfahrzeugen zum Einsatz. Sie dienen der Erwärmung von Komponenten eines Elektrofahrzeuges im Bereich der Elektromobilität und/oder der Klimatisierung des Fahrzeuginnenraums. Die PTC-Heizvorrichtung der eingangs genannten Art ist dazu in einer elektrischen Heizvorrichtung aufgenommen, die üblicherweise eine Zirkulationskammer und eine Anschlusskammer ausbildet, wobei beide Kammern durch eine Trennwand voneinander getrennt sind. In der Anschlusskammer sind die Leiterelemente der mehreren PTC-Heizvorrichtungen der elektrischen Heizvorrichtung elektrisch angeschlossen. In der Zirkulationskammer wird das zu erwärmende Medium erwärmt. Das Medium kann gasförmig oder flüssig sein. In eine solche allgemein bekannte elektrische Heizvorrichtung ist bevorzugt auch die PTC-Heizvorrichtung nach der vorliegenden Erfindung eingebaut. Die entsprechende elektrische Heizvorrichtung ist beispielsweise auch aus EP 2 337 425 A1 oder EP 1 872 986 A1 bekannt.

Im Hinblick auf einen möglichst wirkungsvollen Betrieb sollte das PTC-Element die von ihm erzeugte Wärme zu gleichen Teilen und ohne größere Wärmeübergangswiderstände über zwei gegenüberliegende, die Wärme überwiegend abgebende Außenseiten der PTC-Heizvorrichtung auskoppeln. Dazu ist es bekannt, die Außenseite der PTC-Heizvorrichtung dort, wo das PTC-Element mit seinen Hauptseitenflächen an den Leiterelementen anliegt, die Leiterelemente außenseitig nicht mit Kunststoff oder dergleichen zu versehen. Mit anderen Worten bildet der Rahmen zusammen mit den außen freiliegenden Leiterelementen eine Einhausung des PTC-Elementes aus. Die von dem PTC-Element erzeugte Wärme wird durch Wärmeleitung direkt durch das Leiterelement an die Außenseite der PTC-Heizvorrichtung geleitet. Insbesondere bei Hochvoltanwendungen kann an der Außenseite eine Isolierlage, beispielsweise eine Keramik- und/oder Kunststofflage vorgesehen sein. Entsprechende, die Außenflächen der Leiterelemente jeweils abdeckende Isolierlagen verhindern einen unmittelbaren elektrischen Kontakt zwischen den Leiterelementen und dem zu erwärmenden Medium. Die entsprechenden Isolierlagen können die Außenfläche einer PTC-Heizvorrichtung sein, deren Rahmen auch die Isolierlage fügt. Eine solche PTC-Heizvorrichtung kann beispielsweise als Steckelement fluiddicht in die Trennwand eingesetzt sein und nach Art einer Heizrippe in die Zirkulationskammer der Heizvorrichtung hineinragen; vgl. DE 20 2019 005 223 U1. Alternativ kann die PTC-Heizvorrichtung auch in eine üblicherweise metallische Aufnahmetasche eingesetzt werden, die regelmäßig einteilig mit der Trennwand der oben genannten Heizvorrichtung verbunden ist und nach Art einer Heizrippe in die Zirkulationskammer hineinragt, EP 1 872 986 A1. Auch in diesem Fall soll bei Betrieb mit Hochvoltspannung eine unmittelbare elektrische Kontaktierung zwischen jedem der Leiterelemente und der Aufnahmetasche vermieden werden.

PTC-Elemente weisen fertigungsbedingt eine erhebliche maßliche Toleranz auf. Ein PTC-Element, wie es in der vorliegenden Erfindung zum Einsatz kommt, ist üblicherweise ein quaderförmiger Keramikbaustein, der zwei sich gegenüberliegende Hauptseitenflächen und umlaufende Stirnseitenflächen hat. Die Hauptseitenfläche ist üblicherweise zumindest um den Faktor 5 größer als jede der Stirnseitenflächen. Die Hauptseitenflächen sind über das nachfolgend als Höhe bezeichnete Maß voneinander beabstandet. Dieses Höhenmaß kann variieren, was im Hinblick auf die Ausgestaltung des Rahmens und der davon gehaltenen Leiterelemente besondere Maßnahmen erforderlich macht, um im Rahmen der denkbaren Höhentoleranzen jeweils eine solide elektrische Anlage der Leiterelemente gegen die Hauptseitenflächen des PTC-Elementes zu ermöglichen.

So wird mit dem zuvor genannten Stand der Technik EP 2 337 425 A1 vorgeschlagen, zwei Rahmensegmente mit Verriegelungsabschnitten zu versehen, die unter Einschluss des PTC-Elementes so zusammenwirken, dass die PTC-Heizvorrichtung als vormontierte Einheit in die Aufnahmetasche eingesetzt werden kann. Die beiden Rahmensegmente sind nach diesem Stand der Technik über ein Filmscharnier miteinander verbunden. Die Rahmensegmente werden in einem einheitlichen Bauteil bereitgestellt, das aus einem weichelastischen Silikon hergestellt ist.

Nach einer anderen vorbekannten Lösung gemäß EP 1 916 873 A1 befindet sich zwischen den Rahmensegmenten ein elastisches Dichtelement, welches die Höhentoleranzen des PTC-Elementes in Grenzen nachführen kann, dabei aber auch den Aufnahmeraum gegenüber der Umgebung abdichtet.

Eine ähnliche Ausgestaltung ist aus EP 1 768 457 A1 bekannt. Nach dieser Lösung kann ein das Leiterelement ausbildendes Kontaktblech durch Umspritzen mit dem Rahmen abgedichtet verbunden sein, wohingegen auf der gegenüberliegenden Seite ein Kontaktblech aufgelegt ist, das außenseitig von einer Isolierlage abgedeckt ist, die wiederum sich unter Zwischenlage einer kompressiblen Abdichtung an dem Rahmen abstützt. Der Rahmen ist einteilig ausgebildet. Dadurch wird eine zumindest randseitige Einsiegelung des PTC-Elementes gegenüber der Umgebung und auch eine Kompensation von Höhentoleranzen seitens des PTC-Elementes erreicht. Über die kompressible Dichtung kann das Kontaktblech jeweils in Höhenrichtung in Grenzen nachgeführt werden.

Der vorliegenden Erfindung liegt das Problem zugrunde, eine PTC-Heizvorrichtung der eingangs genannten Art anzugeben, die den oben gestellten Anforderungen in verbesserter Weise gerecht wird.

Die erfindungsgemäße PTC-Heizvorrichtung hat dazu Rahmensegmente, die zum Einschluss des PTC-Elementes in dem Aufnahmeraum miteinander verschweißt, insbesondere ultraschallverschweißt sind.

Wie nachstehend noch näher erläutert werden wird, gelingt es der vorliegenden Erfindung, die Toleranzschwankungen in Höhenrichtung der PTC-Elemente auszugleichen. Die PTC-Heizvorrichtung kann aber als bauliche Einheit dadurch bereitgestellt werden, dass die beiden Rahmensegmente miteinander verschweißt sind. Das Verschweißen kann für jedes PTC-Element einer PTC- Heizvorrichtung in angepasster Weise so erfolgen, dass die Leiterelemente nach dem Herstellen der baulichen Einheit durch Verschweißen flächig gegen das PTC-Element angelegt sind.

Der Rahmen umgibt das PTC-Element umfänglich, regelmäßig vollumfänglich. Parallel zu den Hauptseitenflächen des PTC-Elementes erstrecken sich die Leiterelemente. Diese sind üblicherweise aus Blech gebildet. Jedes der Bleche bildet eine den Rahmen außenseitig überragende Kontaktzunge aus. Nach dieser bevorzugten Ausgestaltung wird das PTC-Element in dem Aufnahmeraum vollständig gegenüber der Umgebung abgedeckt. Die Leiterelemente überdecken die Hauptseitenflächen und überragen diese regelmäßig. Sie sind in den Rahmensegmenten verbunden. Der Rahmen ist in der Regel aus Kunststoff gebildet.

Der Rahmen hat dazu bevorzugt zwei Rahmensegmente. Mit anderen Worten besteht der Rahmen bei dieser bevorzugten Weiterbildung aus lediglich eines dieser beiden Rahmensegmenten. Die Rahmensegmente können identisch ausgebildet sein. So wird die Fertigung insgesamt vereinfacht. Dabei haben die Rahmensegmente ineinandergreifende Verbindungssegmente, die miteinander verschweißt, insbesondere ultraschallverschweißt werden. Die Verbindungssegmente sind vor dem Fügen der Rahmensegmente üblicherweise so ausgebildet, dass diese die Rahmensegmente vor dem Verschweißen voneinander beabstanden. Einander gegenüberliegende und im gefügten Zustand aneinander liegende Rahmenanlageflächen sind dementsprechend mit Abstand zueinander vorgesehen. Die Verbindungssegmente sind so ausgebildet, dass sie vor dem Schweißen die Rahmensegmente eher punktuell oder linienförmig beabstanden. Von beiden Rahmensegmenten können Verbindungssegmente aufeinander zulaufend ausgebildet sein. Die Verbindungssegmente können sich in einer mittleren Teilungsebene der Rahmensegmente treffen. Zu bevorzugen ist indes die Ausbildung eines Verbindungssegmentes als Zapfen und des an dem anderen Rahmensegment komplementär ausgebildeten Verbindungssegmentes als Vertiefung zur Aufnahme des freien Endes des Zapfens.

Bei der erfindungsgemäßen Lösung erfolgt das Verschweißen üblicherweise ausschließlich über die besagten Verbindungssegmente. Wie üblich geht das Schweißen mit der Ausbildung von Schmelzen durch des die Rahmensegmente bildenden Kunststoffs einher, die nach dem Schweißen erstarrt und so eine stoffschlüssige Verbindung zwischen den beiden Rahmensegmenten bewirkt. Bei einem Verbindungssegment in Form eines Zapfens wird in der Vertiefung und zwischen der Vertiefung und dem freien Ende des Zapfens regelmäßig ein punktueller Bereich aufgeschmolzen und ein Schmelzetropfen gebildet. Im Rahmen des Aufschmelzens wird der Abstand der Rahmensegmente zueinander durch Anschmelzen eines Grundes der Vertiefung und/oder des freien Endes des Zapfens verringert, bis die jeweiligen Leiterelemente der Rahmensegmente flächig gegen das PTC-Element anliegen. Mit anderen Worten wird die die Rahmensegmente vor dem Verschweißen gegeneinander beabstandende Höhe so weit abgeschmolzen, dass die Rahmensegmente mit ihren Leiterelementen elektrisch leitend und auch gut wärmeleitend mit dem PTC-Element verbunden sind.

Ein als Verbindungssegment ausgebildeter Zapfen hat üblicherweise eine geringe Erstreckung in Breiten- und Längenrichtung und eine erhebliche Erstreckung in Höhenrichtung. Die höhenmäßige Erstreckung des Zapfens ist üblicherweise größer als die Höhe des PTC-Elementes. Der Zapfen wird vor dem Aufschmelzen in die Vertiefung eingesetzt. Die Vertiefung ist so dimensioniert, dass aufgrund der Höhentoleranz des PTC-Elementes in unterschiedlicher Menge auftretende Schmelze sicher in der Vertiefung verbleibt und eine Ausbreitung der Schmelze, insbesondere in Richtung auf das PTC-Element, unterbleibt. Die Vertiefung sorgt dementsprechend dafür, dass die beim Verschweißen erzeugte Schmelze an dem dazu vorgesehenen Ort, d.h. innerhalb der Vertiefung, verbleibt. Im Hinblick auf eine leichte Initialisierung von Schmelze im Rahmen des Ultraschallschweißens ist es zu bevorzugen, den Zapfen an seinem freien Ende spitz bzw. konisch zulaufend auszuformen.

Es versteht sich, dass abhängig von der gewünschten Festigkeit der Schweißverbindung mehrere Verbindungssegmente an einem der Rahmensegmente und an dem anderen der Rahmensegmente dazu komplementär ausgebildete Verbindungssegmente vorgesehen sein können. Die Verbindungssegmente können über den Umfang des PTC-Elementes verteilt und mit Abstand zu diesem vorgesehen sein. Die Verbindungssegmente befinden sich in der Regel innerhalb der äußeren Umfangsfläche des Rahmens, jedoch außerhalb des Aufnahmeraumes.

Im Hinblick auf eine vollständige Kontrolle der sich bildenden Schmelze im Rahmen des Schweißens wird gemäß einer bevorzugten Weiterbildung der Erfindung vorgesehen, dass benachbart zu den Verbindungssegmenten an zumindest einem der Rahmensegmente ein Steg ausgebildet ist. Dieser Steg befindet sich zwischen der äußeren Umfangsfläche des Rahmens und begrenzt üblicherweise außenseitig die Verbindungssegmente. Durch den Steg wird ein Übertritt von beim Schweißen erzeugter Schmelze über die äußere Kontur des Rahmens hinaus verhindert. Der Steg überragt üblicherweise die innere Anlagefläche des Leiterelements des entsprechenden Rahmensegments, über welche innere Anlageflächen gut wärmeleitend und elektrisch leitend mit dem PTC-Element verbunden sind. Die elektrische Kontaktierung erfolgt dabei üblicherweise über eine Metallisierung auf den Hauptseitenflächen des ansonsten aus Keramik ausgebildeten PTC-Elementes. Diese Metallisierung ist Bestandteil des PTC-Elementes und kann durch Sputtern, Plasmaspritzen oder Siebdruck aufgebracht sein.

Mit der vorliegenden Erfindung wird ferner eine relativ gering in der Höhe aufbauende PTC-Heizvorrichtung vorgeschlagen, die gleichwohl den Vorteil nutzt, Rahmensegmente mit daran vorgesehenen Leiterelementen als bauliche Einheit herzustellen. Die Leiterelemente werden dabei mit dem Rahmensegment durch Umspritzen der Leiterelemente mit dem das jeweilige Rahmensegment ausbildenden Kunststoff eingesiegelt. Die Rahmensegmente sind daher in Endkontur und zusammen mit dem zugehörigen Leiterelement werkzeugfallend vorbereitet. Wie oben erwähnt, werden üblicherweise zur Ausbildung eines Rahmens zwei identische Rahmensegmente mit entsprechenden identischen Leiterelementen hergestellt. So kann die Anzahl an unterschiedlichen Bauteilen zur Herstellung des Rahmens gering bleiben. Auch wird eine fehlerhafte Montage weitestgehend ausgeschlossen, da die Rahmensegmente jeweils komplementär zueinander vorgesehen sind. Entsprechendes gilt für die Leiterelemente. So ist auch das Einsetzen in die Spritzgießform für das Umspritzen vereinfacht.

Die Leiterelemente haben in an sich bekannter Weise eine im Grunde rechteckige Grundfläche, die an dem PTC-Element anliegt. Diese rechteckige Grundfläche kann mit den Abmessungen der Hauptseitenfläche des PTC-Elementes ausgebildet sein oder aber diese geringfügig überragen. Von der rechteckigen Grundfläche ragt die Kontaktzunge ab. Nach der vorliegenden Weiterbildung ragt von der rechteckigen Grundfläche, d.h. dem ansonsten gerade verlaufenden Rand der Leiterelemente, zumindest ein Verbindungssteg ab. Regelmäßig ragen mehrere Verbindungsstege von unterschiedlichen Rändern des einen Leiterelementes ab. Diese Verbindungsstege sind in den Rahmensegmenten eingesiegelt. Die Verbindungsstege haben üblicherweise zur verbesserten Verankerung in dem Rahmensegment aus der Ebene des Blechmaterials gebogene Verbindungsvorsprünge. Diese erstrecken sich üblicherweise im Wesentlichen rechtwinklig zu der inneren Anlagefläche des Leiterelementes. Jedenfalls ist die Höhe des Rahmens dort, wo die Verbindungsstege in den Rahmen eingreifen, verdickt. Der Rahmen hat hier Positioniervorsprünge, die die Verbindungsstege abdecken. Im Hinblick auf eine möglichst geringe Höhe der einzelnen Rahmensegmente sind den jeweiligen Verbindungsvorsprüngen zu den Verbindungsstegen an dem jeweils anderen Rahmensegment Positioniervorsprungaufnahmen zugeordnet. Die Positioniervorsprünge ragen aus der im Wesentlichen ebenen Rahmenanlagefläche hervor. Die Positioniervorsprungaufnahmen treten gegenüber dieser Rahmenanlagefläche regelmäßig zurück. Nach dem Fügen der Rahmensegmente durch Schweißen liegt ein entsprechender Positioniervorsprung in der ihm zugeordneten Positioniervorsprungaufnahme des anderen Rahmensegmentes. Dieses Ineinandergreifen von Positioniervorsprung und Positioniervorsprungaufnahme erfolgt üblicherweise erst im Rahmen des Verschweißens, d.h. im Rahmen der Annäherung der Rahmensegmente beim Aufschmelzen der Verbindungssegmente. Mit anderen Worten erfolgt die Vorpositionierung der Rahmensegmente üblicherweise nicht über die Positioniervorsprünge und deren Aufnahmen.

Ein entsprechender Positioniervorsprung ist bevorzugt auch an einer Stelle vorgesehen, wo die durch das Leiterelement gebildete Kontaktzunge den Rahmen nach außen durchsetzt. Die entsprechende Kontaktzunge ist dementsprechend unter einem Positioniervorsprung des Rahmens hindurchgeführt. Zu diesem Positioniervorsprung ist an dem jeweils anderen Rahmensegment eine entsprechend ausgebildete Aufnahme vorgesehen.

Zusätzlich können an dem Leiterelement Bohrungen versehen sein, die beim Umspritzen von dem Kunststoffmaterial des Rahmensegmentes durchsetzt werden. Die Bohrungen sind üblicherweise nach außen konisch ausgebildet. Dadurch ergibt sich nach dem Spritzgießen ein erstarrter Schmelzepfropfen als Teil des Rahmensegmentes, der innerhalb der Bohrung das Leiterelement auch formschlüssig hält.

Die in den Ansprüchen 6 und 7 enthaltenden Merkmale können auch für sich erfindungswesentlich sein. Eine erfindungsgemäße PTC-Heizvorrichtung kann insofern durch die oberbegrifflichen Merkmale von Anspruch 1 und die kennzeichnenden Merkmale von Anspruch 6 und/oder Anspruch 7 gebildet sein. Dabei sind Rahmensegmente optional. Denn auch ein einzelner Rahmen kann in der in den Ansprüchen 6 bzw. 7 spezifizierten Weise mit einem Leiterelement, insbesondere einem Kontaktblech, verbunden sein.

Weitere Einzelheiten und Vorteile der vorliegenden Erfindung ergeben sich aus der nachfolgenden Beschreibung eines Ausführungsbeispiels in Verbindung mit der Zeichnung.

In dieser zeigen:
- Fig. 1: eine perspektivische Explosionszeichnung des Ausführungsbeispiels der PTC-Heizvorrichtung;
- Fig. 2: eine perspektivische Draufsicht auf ein Rahmensegment des Ausführungsbeispiels nach Fig. 1;
- Fig. 3: eine perspektivische Draufsicht auf das Leiterelement zu dem Rahmensegment gemäß Fig. 2;
- Fig. 4: eine Draufsicht auf das Ausführungsbeispiel nach Fig. 2;
- Fig. 5: eine Schnittansicht entlang der Linie V-V gemäß der Darstellung in Fig. 4;
- Fig. 6: eine Schnittansicht entlang der Linie VI-VI gemäß Fig. 4;
- Fig. 6a: ein vergrößertes Detail am oberen Rand von Fig. 6;
- Fig. 6b: ein vergrößertes Detail am unteren Rand von Fig. 6;
- Fig. 7: eine perspektivische Schnittansicht entlang der Linie VII-VII gemäß der Darstellung in Fig. 4;
- Fig. 8: eine perspektivische Schnittansicht entlang der Linie VIII-VIII gemäß der Darstellung in Fig. 4;
- Fig. 9a, 9b: eine perspektivische Seitenansicht einer Vorrichtung zum Verschweißen der PTC-Heizvorrichtung nach den vorherigen Ausführungsbeispielen in einer Ausgangsposition einer Sonotrode (Fig. 9a) und einer Endposition der Sonotrode (Fig. 9b).

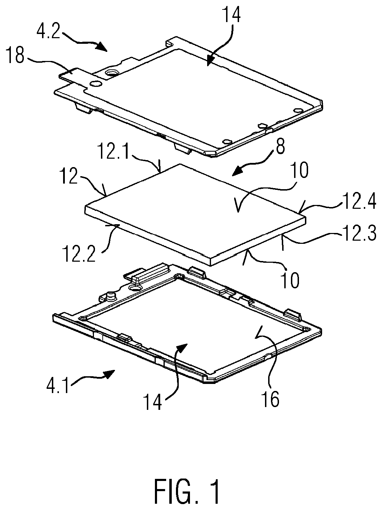

Die Fig. 1 zeigt ein Ausführungsbeispiel einer PTC-Heizvorrichtung 2 mit einem zweiteiligen Rahmen 4, gebildet aus einem ersten Rahmensegment 4.1 und einem zweiten Rahmensegment 4.2. Die Rahmensegmente 4.1 und 4.2 sind identisch ausgebildet. Sie bilden dementsprechend Rahmenhälften aus. Im gefügten Zustand bilden die Rahmensegmente 4.1 und 4.2 den gesamten Rahmen 4 aus und umgeben einen Aufnahmeraum 6. In diesem Aufnahmeraum wird ein PTC-Element 8 aufgenommen, welches als halbleitendes Keramikbauteil mit auf Hauptseitenflächen 10 des PTC-Elementes 8 ausgebildeter Metallisierung vorgesehen ist. Zwischen den Hauptseitenflächen 10 des PTC-Elementes 8 bildet dieses einen umlaufenden Rand 12, dessen jeweilige Randflächen mit Bezugszeichen 12.1-12.4 gekennzeichnet sind, aus.

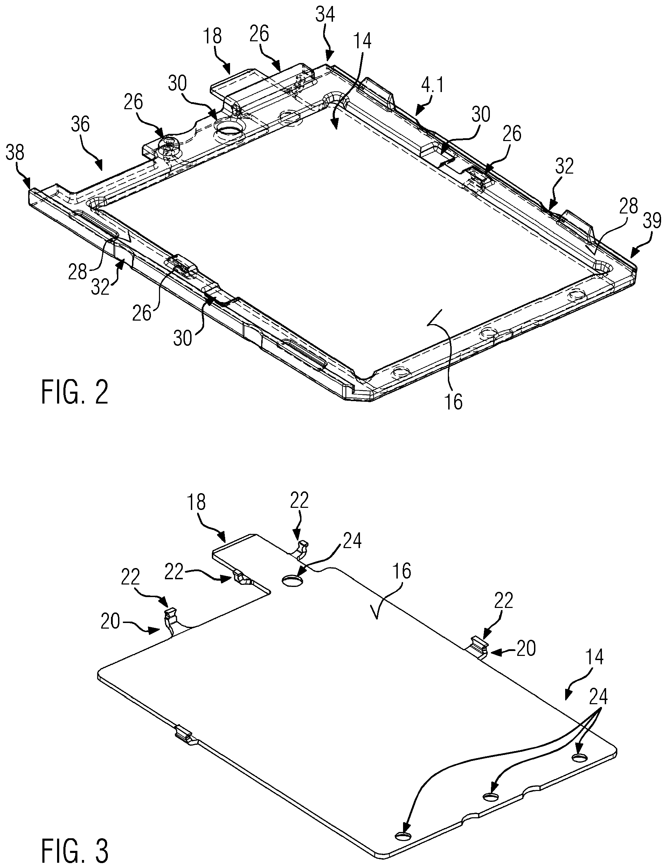

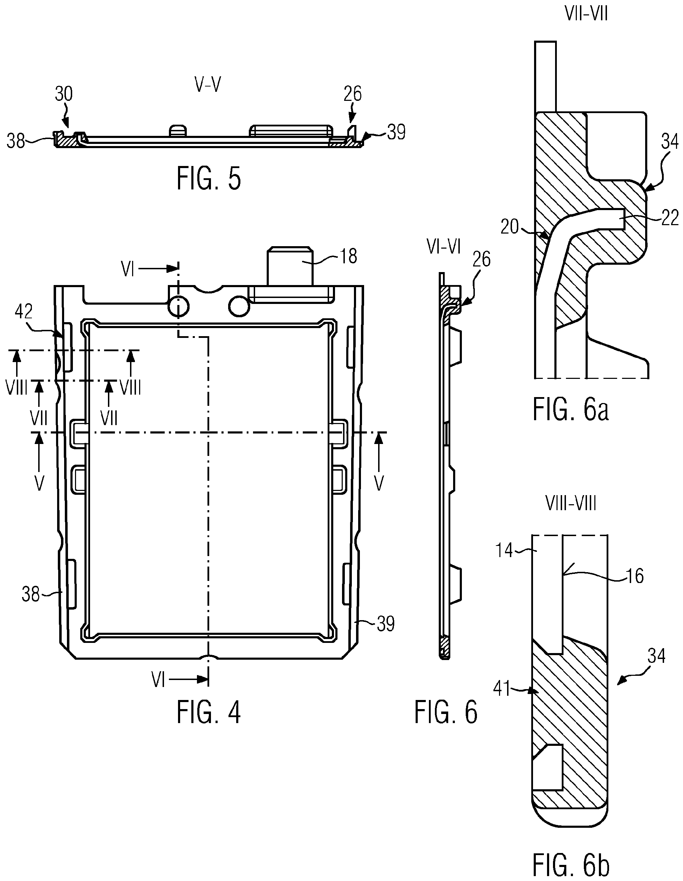

Zu den Hauptseitenflächen 10 bilden mit Bezugszeichen 14 gekennzeichnete Leiterelemente jeweils eine innere Anlagefläche 16 aus. Die Leiterelemente 14 sind aus Blech ausgebildet. Durch Stanzen bilden die Leiterelemente 14 jeweils eine Kontaktzunge 18 aus. Mit Bezugszeichen 20 sind durch Stanzen und Biegen ausgeformte Verbindungsstege gekennzeichnet, die jeweils einen seitlichen Rand der rechteckigen Anlagefläche 16 überragen und durch Biegen aus der Ebene der Anlagefläche 16 vorspringende Verbindungsvorsprünge 22 haben, die insbesondere in den Fig. 3 und 6a zu erkennen sind. Die durch Bleche ausgebildeten Leiterelemente 14 haben ferner im Bereich gegenüberliegender Ränder ausgesparte Bohrungen 24 (vgl. Fig. 3).

Die Verbindungsstege 20 sind jeweils durch einen Positioniervorsprung 26 des Rahmensegmentes 4.1/4.1 überdeckt, wobei der Positioniervorsprung 26 auch den Verbindungsvorsprung 22 in sich aufnimmt. Der entsprechende Positioniervorsprung 26 überragt eine mit Bezugszeichen 28 gekennzeichnete Rahmenanlagefläche, die im Wesentlichen eben ausgebildet ist und in Umfangsrichtung des Rahmensegmentes 4.1/4.2 in einer Ebene umläuft. Zur Aufnahme eines einzelnen Positioniervorsprungs 26 hat das jeweils andere Rahmensegment 4.1 bzw. 4.2 von der Rahmenanlagefläche 28 abgehende Positioniervorsprungaufnahmen 30.

Komplementäre Vorsprünge 26 und Aufnahmen 30 sind an Längsholmen 32 des Rahmens 4 vorgesehen. An einem oberen Querholm 34 ist zu dem dort vorgesehenen runden Positioniervorsprung 26 eine durchgehende Bohrung als Positioniervorsprungaufnahme 30 angeordnet. Der obere Querholm 34 weist eine eckige Aussparung 36 zur Aufnahme eines quaderförmigen Positioniervorsprungs 26 auf, welcher die Kontaktzunge 18 überdeckt und diese einsiegelt.

Durch die zuvor beschriebenen Maßnahmen ist einerseits das Leiterelement 14 solide mit dem jeweiligen Rahmensegment 4.1/4.2 verbunden. Andererseits kann jedes Rahmensegment 4.1/4.2 für sich mit geringer Höhe (Abstand Außenfläche zu Rahmenanlagefläche 28) ausgebildet werden. Wie Fig. 6b verdeutlicht, wird infolge des Umspritzens die Bohrung 24 jeweils mit Schmelze durchsetzt und erstarrt dort zu einem konischen Schmelzepropfen 41. Die Bohrung 24 ist nach außen konisch ausgeformt, sodass der Schmelzepropfen 41 auch eine formschlüssige Verbindung zwischen dem jeweiligen Rahmensegment 4.1/4.2 und dem Leiterelement 14 an dem unteren Querholm 34 bewirkt.

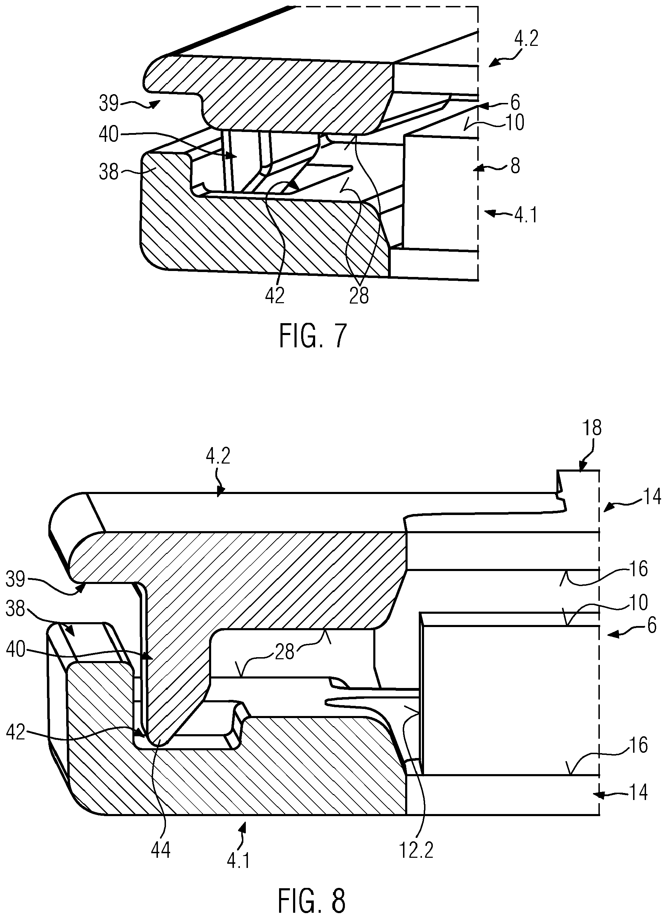

Für das Verschweißen der beiden Rahmensegmente 4.1/4.2 weisen diese Gestaltungen auf, die in den Fig. 7 und 8 verdeutlicht sind. Das Rahmensegment 4.2 hat als Verbindungssegment einen vorspringenden Zapfen 40. Das untere Rahmensegment 4.1 hat eine zu dem Zapfen 40 angepasst ausgebildete Vertiefung 42, die das andere Verbindungssegment im Sinne der vorliegenden Erfindung ausbildet. Wie Fig. 7 verdeutlicht, ist die Vertiefung 42 deutlich größer als die Grundfläche des Zapfens 40. Die Grundfläche des Zapfens 40 ist rechteckig. Von dieser rechteckigen Grundfläche des Zapfens 40 ragt eine konisch vorspringende Spitze 44 des Zapfens 40 ab. Wie die Fig. 7 und 8 verdeutlichen, ist die Vertiefung 42 sowohl entlang des Längsholmes 32 als auch quer dazu deutlich größer als die Grundfläche des Zapfens. Die Vertiefung 42 ist so dimensioniert, dass diese denkbare Schmelzemengen, die beim Ultraschallschweißen durch Aufschmelzen vor allem des Zapfens 40 erzeugt werden können, in der Vertiefung 42 aufgenommen werden können. Die Vertiefung 42 bildet dementsprechend eine Wanne zur Aufnahme denkbarer Schmelzemengen im Rahmen des Ultraschallschweißens. Dadurch bleibt die aufgeschmolzene Kunststoffmasse im Rahmen des Verschweißens der beiden Rahmensegmente 4.1/4.2 innerhalb der jeweiligen Vertiefung.

Ein von dem unteren Rahmensegment 4.1 gemäß Figur 7 bzw. 8 abragender Steg 38 begrenzt die Vertiefung 42 an ihrer Außenseite und verhindert so den denkbaren Austritt von Schmelze an der Außenumfangsfläche des Rahmens 4.

In den Fig. 7 und 8 ist mit Bezugszeichen 38 ein Steg gekennzeichnet, der die Rahmenanlagefläche 28 überragt. Korrespondierend dazu ist im Bereich des Steges 38 die Randfläche des oberen Rahmensegments 4.2 gegenüber der zugeordneten Rahmenanlagefläche 28 durch eine Stegaufnahme 39 zurückgenommen. Diese Stegaufnahme 39 erstreckt sich ununterbrochen über den gesamten Längsholm 32. Mit den Fig. 7 und 8 ergibt sich, dass die Rahmenanlageflächen 28 die Teilungsebene definieren, also auf halber Höhe des gefügten Rahmens liegen. Der Steg 38 des unteren Rahmensegments 4.1 gemäß Fig. 7 bzw. 8 durchragt die Teilungsebene und endet oberhalb derselben. Die Stegaufnahme 39 des oberen Rahmensegmentes 4.2 ist gegenüber der Teilungsebene zurückgenommen.

Wie die Fig. 2 und 4 vermitteln, sind an einem der Längsholme 32 zwei Vertiefungen 42 und an dem gegenüberliegenden Längsholm 32 zwei Zapfen 40 ausgebildet, die außenseitig in der Stegaufnahme 39 enden. Die Zapfen 40 und die Vertiefung 42 haben eine insgesamt in Bezug auf die Gesamterstreckung des Längsholmes 32 geringe Längserstreckung. Die Zapfen 40 können leicht rippenförmig ausgebildet sein. Sie erstrecken sich jedenfalls nicht über die gesamte Längserstreckung des Längsholmes 32. Die gegenüberliegenden Querholme 34 sind frei von Verbindungssegmenten zum Verschweißen der beiden Rahmensegmente 4.1/4.2.

Im Rahmen der Herstellung des gezeigten Ausführungsbeispiels werden zunächst zwei identische Leiterelemente durch Stanzen und Biegen eines Bleches ausgeformt. Diese werden in eine Spritzgussform eingelegt und mit dem die Rahmensegmente 4.1 bzw. 4.2 ausbildenden Kunststoff umspritzt. Dabei werden vor allem die Verbindungsvorsprünge 22 in dem Kunststoffmaterial eingesiegelt. Für die PTC-Heizvorrichtung 2 werden zwei der in Fig. 2 dargestellten Rahmensegmente 4.1 in identischer Weise vorbereitet.

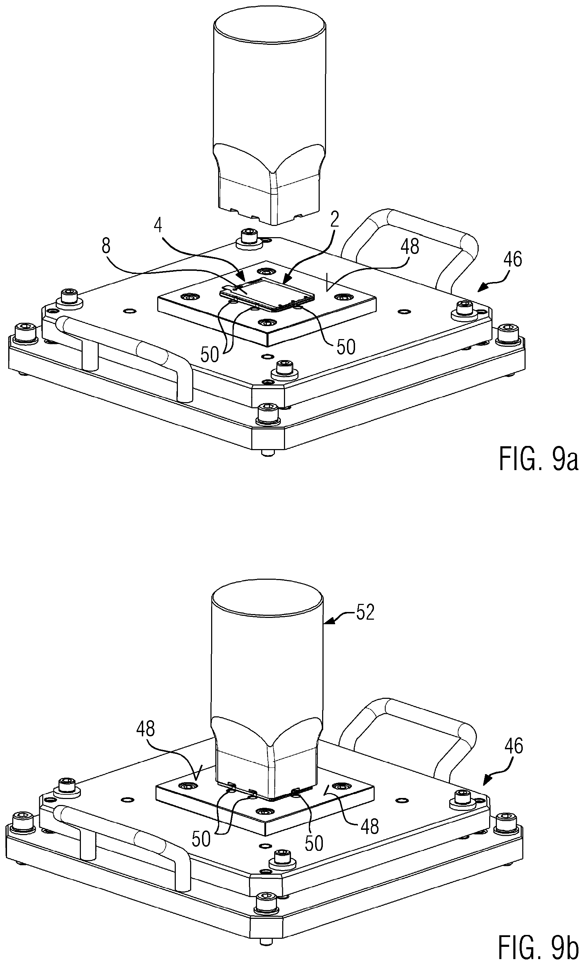

Das untere Rahmensegment 4.1 wird zur Montage in eine Montagehilfsvorrichtung eingebracht, die in den Fig. 9a, 9b mit Bezugszeichen 46 gekennzeichnet ist. Diese Montagehilfsvorrichtung 46 hat eine Anlagefläche 48, die von Begrenzungseinrichtungen 50 überragt ist. Das untere Rahmensegment 4.1 wird gegen die Anlagefläche 48 angelegt. Dabei wird das Rahmensegment 4.1 seitlich durch die Begrenzungseinrichtungen 50 mit enger Toleranz eingegrenzt. So ist am Ende der Einbringbewegung das Rahmensegment 4.1 exakt relativ zu der Montagehilfsvorrichtung 46 positioniert.

Sodann wird das PTC-Element 8 auf die innere Anlagefläche 16 des entsprechenden Leiterelementes 14 aufgelegt. Wie die Fig. 7 und 8 verdeutlichen, wird das PTC-Element 8 geringfügig von der freien inneren Anlagefläche 16 überragt.

Sodann wird das andere der vorbereiteten Rahmensegmente 4.2 dem unteren Rahmensegment 4.1 auf der Montagehilfsvorrichtung 46 angenähert. Die Begrenzungseinrichtungen 50 ermöglichen auch hier eine gute relative Positionierung der beiden Rahmensegmente 4.1/4.2. Sodann greifen die Zapfen 40 in die zugeordneten Vertiefungen 42 ein. Der in den Fig. 7 und 8 dargestellte Zustand ist erreicht.

Danach wird eine mit Bezugszeichen 52 in den Fig. 9a/9b gekennzeichnete Sonotrode dieser Schichtung aus den beiden Rahmensegmenten 4.1/4.2 und dem PTC-Element 8 angenähert. Ultraschall wird angewandt, um die Zapfen 40 in den Vertiefungen 42 aufzuschmelzen. Dabei schmilzt zuvorderst die Spitze 44 des Zapfens 40 auf, nicht so sehr die Oberfläche der Vertiefung 42. Durch einen gewissen Andruckdruck, der durch die Sonotrode 52 aufgebracht wird, nähern sich die beiden Rahmensegmente 4.1/4.2 einander an. Die Fügebewegung findet ihr Ende, wenn die innere Anlagefläche 16 des oberen Rahmensegmentes 4.2 gegen die in den Fig. 7 und 8 obere Hauptseitenfläche 10 des PTC-Elementes 8 angelegt ist. Die Bewegung der Sonotrode 52 ist üblicherweise kraftgesteuert. Der mit der flächigen Anlage des Leiterelementes 14 gegen das PTC-Element 8 einhergehende höhere Widerstand gegen eine fortschreitende Annäherungsbewegung wird als Signal verstanden, die Zustellbewegung der Sonotrode 52 zu stoppen.

Nach Beendigung der Ultraverschweißung erstarrt die Schmelze. Überschüssige Schmelze der beiden Verbindungssegmente 40/42 befindet sich innerhalb der Vertiefung 42.

Nach Zurückfahren der Sonotrode in die in Fig. 9a gezeigte Ausgangsstellung kann die fertiggestellte PTC-Heizvorrichtung entnommen werden.

### Bezugszeichenliste

- 2: PTC-Heizvorrichtung
- 4: Rahmen
- 4.1: Rahmensegment
- 4.2: Rahmensegment
- 6: Aufnahmeraum
- 8: PTC-Element
- 10: Hauptseitenfläche
- 12: Randfläche
- 14: Leiterelemente
- 16: innere Anlagefläche
- 18: Kontaktzunge
- 20: Verbindungssteg
- 22: Verbindungsvorsprung
- 24: Bohrung
- 26: Positioniervorsprung
- 28: Rahmenanlagefläche
- 30: Positioniervorsprungaufnahme
- 32: Längsholm
- 34: Querholm
- 36: Aussparung
- 38: Steg
- 39: Stegaufnahme
- 40: Verbindungssegment/Zapfen
- 41: Schmelzepropfen
- 42: Verbindungssegment/Vertiefung
- 44: Spitze
- 46: Montagehilfsvorrichtung
- 48: Anlagefläche
- 50: Begrenzungseinrichtungen
- 52: Sonotrode

## Patentansprüche

1. PTC-Heizvorrichtung (2) mit einem Rahmen (4), der einen Aufnahmeraum (6) umgibt, zumindest einem in dem Aufnahmeraum (6) aufgenommenen PTC-Element (8) und mit dem PTC-Element (8) elektrisch leitend verbundenen Leiterelementen (14), die das PTC-Element (8) zwischen sich einschließen, wobei jedes der Leiterelemente (14) zumindest teilumfänglich von einem Rahmensegment (4.1; 4.2) umgeben ist, **dadurch gekennzeichnet, dass** die Rahmensegmente (4.1; 4.2) zum Einschuss des PTC-Elements (8) in dem Aufnahmeraum (6) miteinander verschweißt, insbesondere ultraschallverschweißt sind.

2. PTC-Heizvorrichtung nach Anspruch 1, **dadurch gekennzeichnet, dass** der Rahmen (4) durch zwei Rahmensegmente (4.1; 4.2) gebildet ist, die jeweils gegen das PTC-Element (8) anliegende Leiterelemente (14) umgeben und zusammenwirkende Verbindungssegmente (40; 42) ausbilden, die miteinander verschweißt, insbesondere ultraschallverschweißt sind.

3. PTC-Heizvorrichtung nach Anspruch 2, **dadurch gekennzeichnet, dass** benachbart zu den Verbindungssegmenten (40; 42) an zumindest einem der Rahmensegmente (4.1; 4.2) eine zur Aufnahme von beim Schweißen erzeugter Schmelze angepasst ausgebildete Vertiefung (42) ausgebildet ist.

4. PTC-Heizvorrichtung nach Anspruch 2 oder 3, **dadurch gekennzeichnet, dass** zumindest eines der Rahmensegmente (4.1) einen Zapfen (40) aufweist, dem an dem anderen Rahmensegmente (4.2) eine den Zapfen (40) aufnehmende Vertiefung (42) zugeordnet ist.

5. PTC-Heizvorrichtung nach zumindest einem der Ansprüche 2 bis 4, **dadurch gekennzeichnet, dass** benachbart zu den Verbindungssegmenten (40) an zumindest einem der Rahmensegmente ein den Übertritt von beim Schweißen erzeugter Schmelze über die Kontur des Rahmens (4) hinaus verhindernder Steg (38) ausgebildet ist.

6. PTC-Heizvorrichtung nach einem der vorherigen Ansprüche, **dadurch gekennzeichnet, dass** jedes der Leiterelemente (14) durch Umspritzen eines das zugeordnete Rahmensegment (4.1; 4.2) ausbildenden Kunststoffs in dem Rahmensegment (4.1; 4.2) eingesiegelt ist und, dass die Leiterelemente (14) von einem Rand abragende Verbindungsstege (20) aufweisen, die durch an dem einen der Rahmensegmente (4.1; 4.2) ausgebildete Positioniervorsprünge (26) abgedeckt sind, denen an dem anderen der Rahmensegmente (4.2; 4.1) Positioniervorsprungaufnahmen (30, 36) zugeordnet sind.

7. PTC-Heizvorrichtung nach Anspruch 6, **dadurch gekennzeichnet, dass** eine außen von dem Rahmen (4) abragende Kontaktzunge (18) unterhalb eines der Positioniervorsprünge (26) durch den Rahmen (4) hindurchgeführt ist.

8. Verfahren zur Herstellung einer PTC-Heizvorrichtung, bei dem Rahmensegmente (4.1; 4.2) aus einem Kunststoff spritzgegossen werden, hierbei an den Rahmensegmenten (4.1; 4.2) zusammenwirkende Verbindungssegmente (40; 42) ausgebildet werden, jedes der Rahmensegmente (4.1; 4.2) mit einem Leiterelement (14) verbunden wird, zwischen die Rahmensegmente (4.1; 4.2) zumindest ein PTC-Element (8) eingebracht wird, die Rahmensegmente (4.1; 4.2) einander angenähert werden, bis die Verbindungssegmente (4.1; 4.2) gegeneinander anliegen, und schließlich die Verbindungssegmente (40; 42) angeschmolzen und dabei die Rahmensegmente (4.1; 4.2) weiter einander angenähert werden, bis die Leiterelemente (14) gegen das PTC-Element (8) anliegen.

9. Verfahren nach Anspruch 8, **dadurch gekennzeichnet, dass** eines der Rahmensegmente (4.1) in eine Montagehilfsvorrichtung (46) eingebracht wird, die eine unterseitig das Rahmensegment (4.1) abstützende Anlagefläche (48) und seitliche Begrenzungseinrichtungen (50) zur Positionierung des Rahmensegmentes (4.1) aufweist, und nachfolgend das andere der Rahmensegmente (4.2) unter Einschluss zumindest eines PTC-Elementes (8) zwischen den Rahmensegmenten (4.1; 4.2) unter Führung der seitlichen Begrenzungseinrichtungen (50) auf das eine der Rahmensegmente (4.1) so aufgebracht, dass die an den Rahmensegmenten (4.1; 4.2) vorgesehenen Verbindungssegmente (40; 42) ineinandergreifen, dass die Verbindungssegmente (40; 42) miteinander verschweißt werden und danach die so hergestellte PTC-Heizvorrichtung (2) aus der Montagehilfsvorrichtung (46) entnommen wird.
